# EUROPEAN PATENT APPLICATION

(11) **EP 1 653 328 A2**
(43) Date of publication of application: **03.05.2006**
(21) Application number: 05256369.9
(22) Date of filing: 13.10.2005
(51) Int. Cl.: G06F 1/18

(54) **A device connector module receptacle**

(30) Priority: 26.10.2004 US 974314
(71) Applicant: Hewlett-Packard Development Company, L.P., Houston, TX 77070 (US)
(72) Inventor: Ng, Kai Ming, San Jose, CA 95139 (US); Norman, John, San Jose, CA 95129 (US); Andres, Guillermo, Pleasanton, CA 94566 (US); Neal, Thomas S., Cupertino, CA 95014 (US)
(74) Representative: Jackson, Richard Eric

(57) **Abstract**

A device connector module receptacle 300. The device connector module receptacle 300 includes a plurality of slots 310 for receiving a plurality of device connector modules 100. A device connector module 100 includes a device connection mechanism 110 including a first port 112 for coupling to an external device and a second port 114 for coupling to a computer system 500. A device connector module 100 also includes a housing 120 encasing the device connection mechanism 110 such that the first port 112 and the second port 114 are accessible and wherein the housing 120 is for coupling the device connector module 100 to the device connector module receptacle 300. The device connector module receptacle 300 is configured for coupling to a chassis 505 of the computer system 500.

## Description

### TECHNICAL FIELD

Embodiments of the present invention relate to the field of electronic device connectors. Specifically, embodiments of the present invention relate to a device connector module receptacle.

### BACKGROUND ART

The use of computer systems is virtually ubiquitous in the modern world. Moreover, computer users typically employ a number of external electronic devices, such as digital cameras, digital video cameras, and digital music players (e.g., MP3 players) that provide added user functionality by sharing data with a computer system. To facilitate this data sharing, most recent computer systems provide a number of device connectors for connecting to external devices.

Typically, a computer system includes a number of device connectors in a single Integrated cluster. The Integrated cluster may be accessible through an opening in the front bezel of the housing of the computer system. The integrated cluster is designed and manufactured to include the particular combination of device connectors for use in conjunction with a particular computer system design. The design and manufacturing of the integrated cluster requires the computer system designer to determine which types of device connectors to include. For example, a low-end computer system may include an integrated cluster having a small number of device connectors, such as a single Universal Serial Bus (USB) connector and a single audio output, while a high-end computer system may include an integrated cluster having a large number of device connectors, such as multiple USB connectors, multiple IEEE1394 connectors, and various audio and video connectors. Each different integrated cluster of device connectors must be individually designed and manufactured according to the specifications of the different computer systems.

Typically, each different design of integrated cluster is associated with a particular product (e.g., type of computer system), and can only be used with that product. As such, the design and manufacturing time required for each integrated cluster increases the time-to-market for the associated product. In this age of fast computer innovations, this added time to market may have an adverse effect on the marketability and realized profit of a product.

Moreover, because each integrated cluster is product specific, the designers and manufacturers must be very conscientious when ordering and/or producing an integrated cluster for a particular product. For example, if too many integrated clusters are produced, the overall profit generated by the associated product may be reduced, because there will be extra integrated clusters that are not used. Alternatively, if too few Integrated clusters are produced, and an additional number must be reordered for a particular product, various manufacturing costs will be reapplied to the order, also reducing the overall profit of the product. Due to the low profit margins on computer systems, the added cost that may be incurred due to the over-production or under-production of a particular Integrated cluster may be a great factor in decreasing the profit generated by a computer system.

### DISCLOSURE OF THE INVENTION

Various embodiments of the present invention, a device connector module receptacle, are described herein. The device connector module receptacle includes a plurality of slots for receiving a plurality of device connector modules. A device connector module includes a device connection mechanism including a first port for coupling to an external device and a second port for coupling to a computer system. A device connector module also includes a housing encasing the device connection mechanism such that the first port and the second port are accessible and wherein the housing is for coupling the device connector module to the device connector module receptacle. The device connector module receptacle is configured for coupling to a chassis of the computer system.

### BRIEF DESCRIPTION OF THE DRAWINGS

The accompanying drawings, which are incorporated in and form a part of this specification, illustrate embodiments of the invention and, together with the description, serve to explain the principles of the invention:
FIGURE 1A is a front perspective diagram of a device connector module, in accordance with an embodiment of the present invention.
FIGURE 1 B is a cut-away side view of a device connector module, in accordance with an embodiment of the present invention.
FIGURE 2 illustrates front views of different configurations of a device connector module, in accordance with embodiments of the present invention.
FIGURE 3A Is a front perspective diagram of a device connector module receptacle, in accordance with an embodiment of the present invention.
FIGURE 3B is a back perspective diagram of a device connector module receptacle, in accordance with an embodiment of the present invention.
FIGURE 3C is a side view of a device connector module receptacle, in accordance with an embodiment of the present invention.
FIGURE 4 is a front view of a device connector module receptacle, in accordance with an embodiment of the present invention.
FIGURE 5A is a front perspective diagram of a chassis of a computer system, in accordance with an embodiment of the present invention.
FIGURE 5B is a front view of a chassis of a computer system, in accordance with an embodiment of the present invention.
FIGURE 6A is a perspective diagram of the exterior an exemplary computer system housing, In accordance with an embodiment of the present invention.
FIGURE 6B is a perspective diagram of a portion of the interior of an exemplary computer system housing, in accordance with an embodiment of the present invention.
FIGURE 7 is a block diagram of electronic components of an exemplary computer system platform, in accordance with an embodiment of the present invention.
FIGURE 8 is a flow chart diagram of a process for using a device connector module receptacle, in accordance with an embodiment of the present invention.

### BEST MODE FOR CARRYING OUT THE INVENTION

Reference will now be made in detail to various embodiments of the invention, examples of which are illustrated in the accompanying drawings. While the invention will be described in conjunction with these embodiments, it will be understood that they are not intended to limit the invention to these embodiments. On the contrary, the invention is intended to cover alternatives, modifications and equivalents, which may be included within the spirit and scope of the invention as defined by the appended claims. Furthermore, in the following description of the present invention, numerous specific details are set forth in order to provide a thorough understanding of the present invention. In other instances, well-known methods, procedures, components, and circuits have not been described in detail as not to unnecessarily obscure aspects of the present invention.

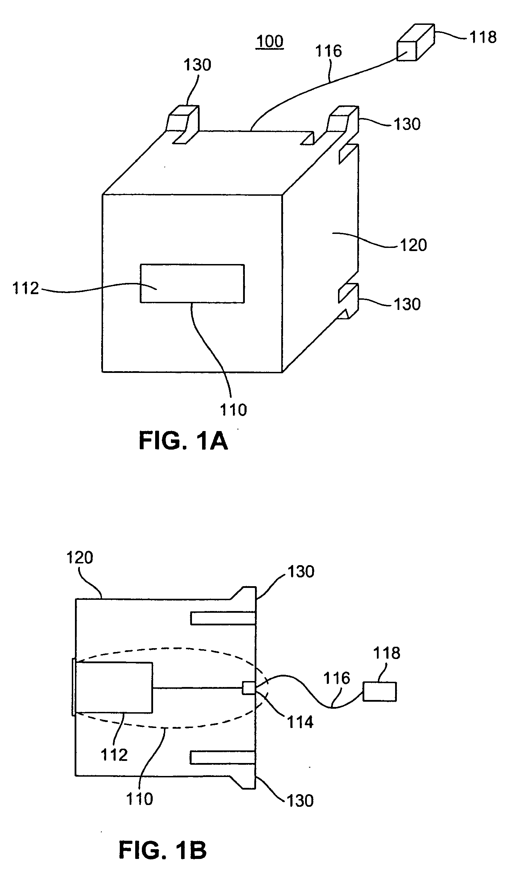

Figure 1A is a front perspective diagram of a device connector module 100, in accordance with an embodiment of the present invention. Figure 1 B is a cut-away side view of device connector module 100, In accordance with an embodiment of the present invention. Device connector module 100 includes a device connection mechanism 110 and a housing 120 for encasing device connection mechanism 110. Device connection mechanism 110 is operable to provide a connection for coupling an external device to a computer system. Device connection mechanism 110 includes a first port 112 for coupling to the external device and a second port (see second port 114 of Figure 1B) for coupling to the computer system. In one embodiment, second port is coupled to the computer system over a data cable 116 that terminates in connector 118, wherein connector 118 is operable to be electrically coupled to the computer system.

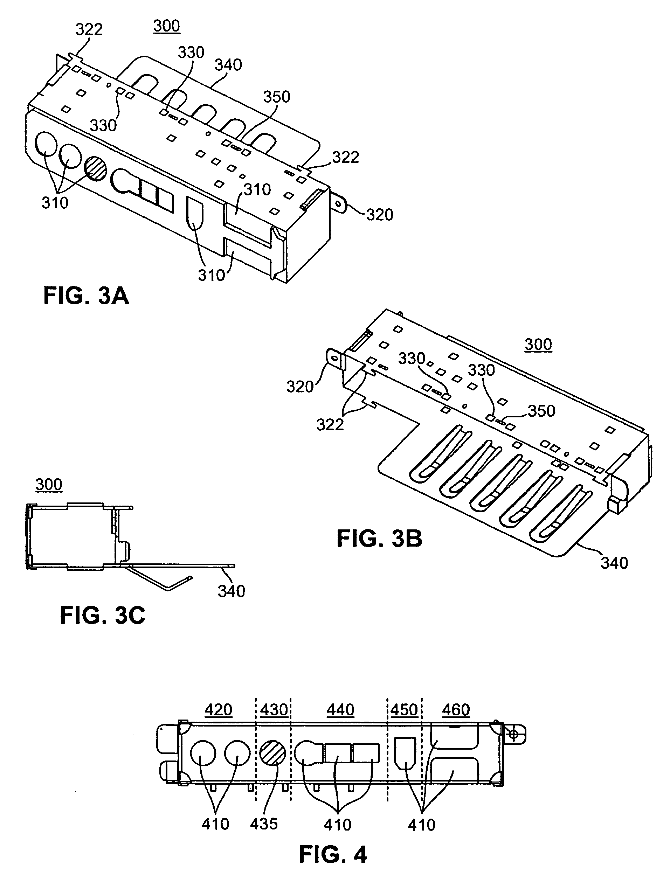

Housing 120 encases device connection mechanism 110 such that first port 112 and second port 114 are accessible. In other words, first port 112 and second port 114 are available for receiving connectors of the external device and computer system, respectively. Housing 120 is also configured for coupling device connector module 100 to a device connector module receptacle (e.g., device connector module receptacle 300 of Figures 3A and 3B). In one embodiment, housing 120 is comprised of a plastic material.

In one embodiment, housing 120 includes at least one keying tab 130 for fixedly coupling device connector module 100 to the device connector module receptacle. Keying tabs 130 are snapped into a keying tab aperture of the device connector module receptacle. Housing 120 is operable to be decoupled from the device connector module receptacle by releasing the keying tabs 130. In one embodiment, where housing 120 is comprised of plastic, keying tabs 130 are engaged and released by applying force to keying tabs 130.

In one embodiment, keying tabs 130 are configured such that housing 120 is coupled to a particular position of the device connector module receptacle. In one embodiment, keying tabs 130 are configured such that housing 120 is coupled at a particular orientation to the device connector module receptacle. For example, housing 120 may be configured such that keying tabs 130 for a particular device connector module 100 are placed at specific distances from each other. Also, keying tabs 130 can be placed at a specific distance from the front surface of device connector module 100 (e.g., the surface at which first port 112 is accessible.

Device connection mechanism 110 may be any connector for electrically coupling an external device to a computer system. It should be appreciated that device connection mechanism 110 may be, but is not limited to, the following connectors:
- a Universal Serial Bus (USB) connector (Type A or Type B);
- a Mini USB connector (1.0 or 2.0);
- an IEEE 1394 connector (4-pin or 6-pin);
- a video connector, such as an S-Video connector or an RCA connector;
- an audio connector, such as an RCA connector, a 3.5 mm Mini Phone Plug connector, or a Toslink connector for digital audio; and

• a fiber optic network connector, such as an SC connector, an ST connector, or an MTRJ connector.

In one embodiment, device connector module 100 includes more than one device connection mechanism 110. For example, device connection mechanisms having related functionality may be Included in the same device connector module 100. Also, a device connector module 100 may include more than one of the same device connection mechanisms.

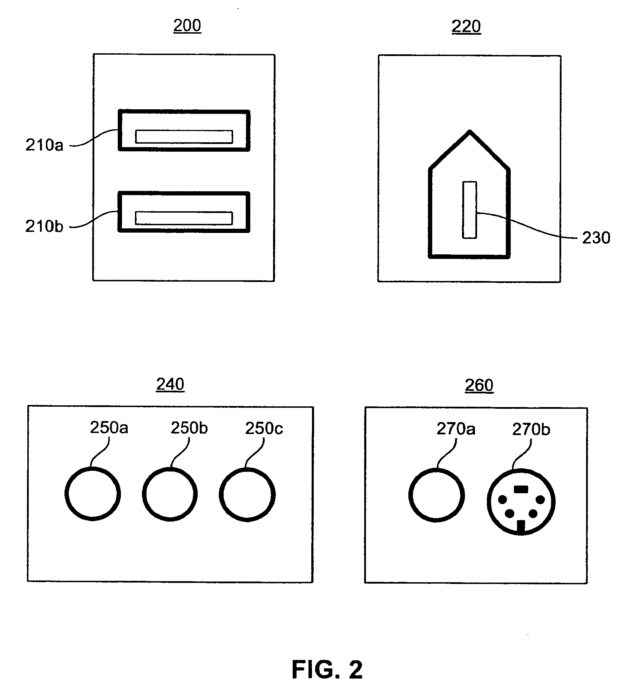

Figure 2 illustrates front views of different configurations of a device connector module, in accordance with embodiments of the present invention. Device connector module 200 includes two USB connectors. Device connector module 220 includes one 6-pin IEEE 1394 connector 230. Device connector module 240 includes three RCA connectors 250a, 250b and 250c. In one embodiment, RCA connectors 250a and 250b are audio connectors (e.g., a left-side RCA connector and a right-side RCA connector) and RCA connector 250c is a video connector. Device connector module 260 includes an RCA connector 270a and an S-Video connector 270b. RCA connector 270a may be either an audio connector or a video connector. It should be appreciated that the configurations of device connector modules 200, 220, 240 and 260 are exemplary, and that any combination of device connection mechanisms may be implemented in the present invention.

Figure 3A is a front perspective diagram of a device connector module receptacle 300, in accordance with an embodiment of the present invention. Similarly, Figure 38 is a back perspective diagram of device connector module receptacle 300 and Figure 3C is a side view of device connector module receptacle 300. Device connector module receptacle 300 includes a plurality of slots 310 for receiving a plurality of device connector modules (e.g., device connector module 100 of Figures 1A and 1B). A slot 310 is configured to provide access to the device connection mechanism of the device connector module associated with the particular slot 310.

Device connector module receptacle 300 is configured for coupling to a chassis of a computer system. Hooks 322 of device connector module receptacle 300 are configured for engaging device connector module receptacle 300 with the chassis. Aperture 320 is configured to receive a screw for fastening device connector module receptacle 300 to the chassis. In one embodiment, device connector module receptacle 300 includes an extension 340 that is placed into a drive bay of the chassis. Extension 340 may be fastened to the chassis. It should be appreciated that device connector module receptacle 300 may Include any or all of hooks 322, aperture 320 or extension 340. It should also be appreciated that device connector module receptacle 300 may be connected to a chassis using other well-known techniques that are known by those skilled in the art, and is not limited to the embodiments described herein.

In one embodiment, device connector module receptacle 300 also includes at least one keying tab aperture 330 for receiving a keying tab of the housing of a device connector module. The keying tab is engaged with the keying tab aperture for fixedly coupling the device connector module into a slot 310 of device connector module receptacle 300. In one embodiment, the keying tab aperture is configured such that the device connector module is coupled to a particular slot of device connector module receptacle 300. In one embodiment, the keying tab aperture is configured such that the device connector module is coupled at a particular orientation to device connector module receptacle 300. In one embodiment, device connector module receptacle 300 includes a label 350 associated with a slot 310 or group of slots 310. Label 350 provides a user with a visual Indicator as to which type of device connector module is to be placed in a particular location (e.g., slot 310) of device connector module receptacle 300.

Figure 4 is a front view of an exemplary device connector module receptacle 400, in accordance with an embodiment of the present invention. Device connector module receptacle 400 indudes a plurality of slots 410 for receiving device connector modules (e.g., device connector module 100 of Figures 1A and 1B). Figure 4 illustrates an example of the placement of particular device connector modules into a particular position of device connector module receptacle 400, as indicated by the dotted lines.

Position 420 is configured to receive a device connector module having two device connection mechanisms, such as device connector module 260 of Figure 2. Position 430 is unused, and is not configured to receive any device connector module. It should be appreciated that knockout 435 may be removed, providing access to position 430 for a device connector module. Position 440 is configured to receive a device connector module having three device connection mechanisms, such as device connector module 240 of Figure 2. Position 450 is configured to receive a device connector module having one device connection mechanism, such as device connector module 220 of Figure 2. Position 460 is configured to receive a device connector module having two device connection mechanisms, where one device connection mechanism is atop the other, such as device connector module 200 of Figure 2. It should be appreciated that the configuration of slots 410 of device connector module receptacle 400 is exemplary, and that device connector module receptacle 400 may include any configuration of slots for placement of any combination of device connector modules.

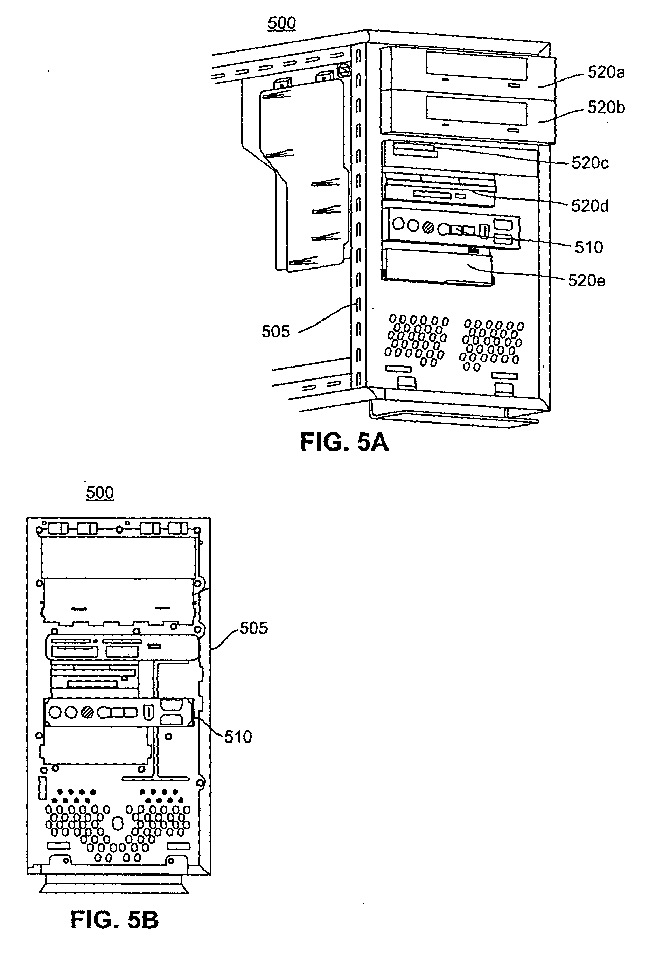

Figure 5A is a front perspective diagram of a chassis 505 of a computer system 500, in accordance with an embodiment of the present invention. Similarly, Figure 5B is a front view of chassis 505 of computer system 500. Computer system 500 includes a plurality of computing components 520a-e that are physically coupled to chassis 505. It should be appreciated that computing components 520a-e may include, but are not limited to CD-ROM drives, floppy disk drives, USB drives, and other removable media drives. Device module connector receptacle 510 is also physically coupled to chassis 505. in one embodiment, device module connector receptacle 510 is located in a drive bay of chassis 505.

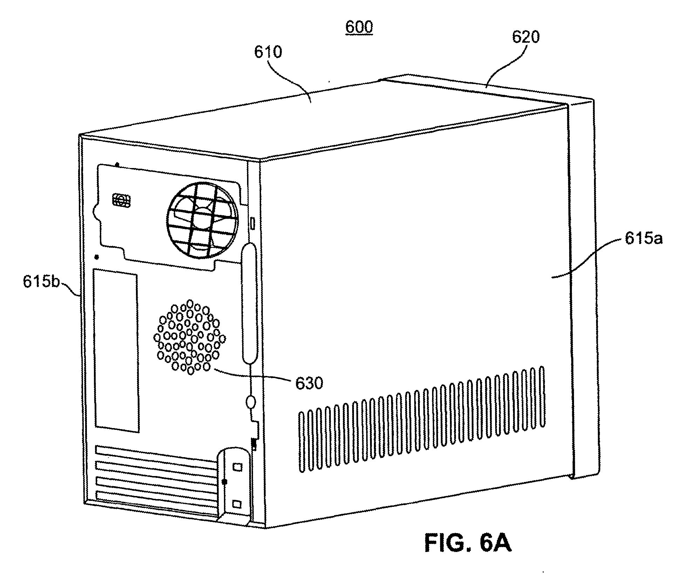

Figure 6A is a perspective diagram of the exterior an exemplary computer system housing 600, in accordance with an embodiment of the present invention. As shown, computer system housing 600 includes top panel 610, side panels 615a and 615b, and front panel (e.g., bezel) 620 secured to chassis 630. In one embodiment, side panel 615a and front panel 620 are removably attached to chassis 630 for allowing access to the interior of computer system housing 600. In one embodiment, chassis 630 is metal and top panel 610 and side panels 615a and 615b include a metal layer for encasing the interior of computer system housing 600 in metal.

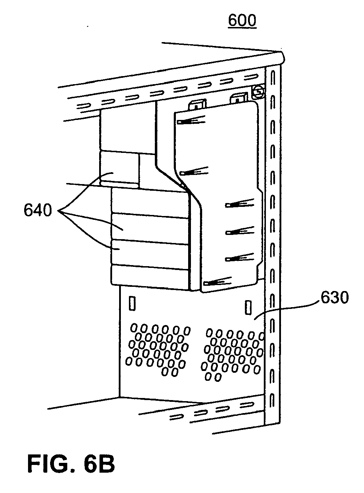

Figure 6B is a perspective diagram of a portion of the interior of an exemplary computer system housing 600, in accordance with an embodiment of the present invention. As shown, the front panel of chassis 630 is connected to a number of drive bays 640. Drive bays 640 are for holding various drives, including by not limited to CD-ROM drives, floppy disk drives, USB drives, and other removable media drives. It should be appreciated that drive bays 640 may be configured to hold any type or size of drive (e.g., any 5.25 inch drive or 3.5 inch drive).

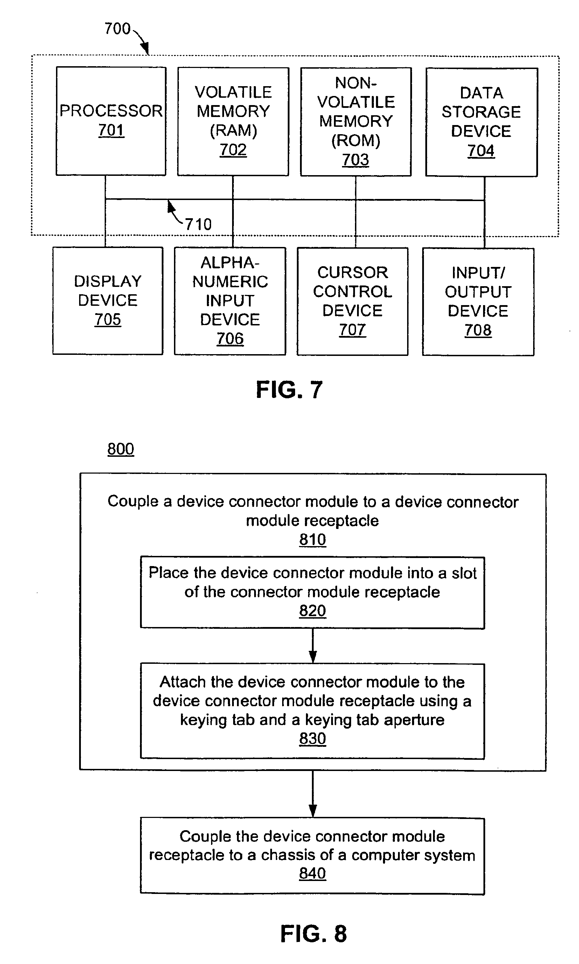

Computer system housing 600 of Figures 6A and 6B is also configured to hold the electronic components of a computer system. Figure 7 is a block diagram of electronic components of an exemplary computer system 700, in accordance with an embodiment of the present invention. In general, computer system 700 includes bus 710 for communicating information, processor 701 coupled with bus 710 for processing information and instructions, random access (volatile) memory (RAM) 702 coupled with bus 710 for storing information and instructions for processor 701, read-only (non-volatile) memory (ROM) 703 coupled with bus 710 for storing static information and instructions for processor 701, data storage device 704 such as a magnetic or optical disk and disk drive coupled with bus 710 for storing information and instructions. In one embodiment, data storage device 704 is configured to be held In a drive bay 640 of Figure 6B.

In one embodiment, computer system 700 comprises an optional user output device such as display device 705 coupled to bus 710 for displaying information to the computer user, an optional user input device such as alphanumeric input device 707 including alphanumeric and function keys coupled to bus 710 for communicating information and command selections to processor 701, and an optional user input device such as cursor control device 707 coupled to bus 710 for communicating user input information and command selections to processor 701. Furthermore, an optional input/output (I/O) device 708 is used to couple computer system 700 onto, for example, a network.

Display device 705 utilized with computer system 700 may be a liquid crystal device, cathode ray tube, or other display device suitable for creating graphic images and alphanumeric characters recognizable to the user. Cursor control device 707 allows the computer user to dynamically signal the two-dimensional movement of a visible symbol (pointer) on a display screen of display device 705. Many implementations of the cursor control device are known in the art Including a trackball, mouse, joystick or special keys on alphanumeric input device 706 capable of signaling movement of a given direction or manner of displacement. It is to be appreciated that the cursor control 707 also may be directed and/or activated via input from the keyboard using special keys and key sequence commands. Alternatively, the cursor may be directed and/or activated via input from a number of specially adapted cursor directing devices.

Figure 8 is a flow chart diagram of a process 800 for using a device connector module receptacle, in accordance with an embodiment of the present invention. Although specific steps are disclosed in process 800, such steps are exemplary. That is, the embodiments of the present invention are well suited to performing various other steps or variations of the steps recited in Figure 8.

At step 810 of process 800, a device connector module (e.g., device connector module 100 of Figures 1A and 1B) is coupled to a device connector module receptacle (e.g., device connector module receptacle 300 of Figures 3A, 3B and 3C), wherein the device connector module receptacle comprises a plurality of slots for receiving the device connector module. In one embodiment, step 810 includes steps 820 and 830, as described below. In one embodiment, the device connector module comprises a keying tab aperture associated with a slot of the plurality of slots. The keying tab aperture is for receiving a keying tab of the device connector module for fixedly coupling said device connector module into at least one slot. In one embodiment, the keying tab aperture is configured such that the device connector module is coupled to a particular slot of the device connector module receptacle. In one embodiment, the keying tab aperture is configured such that the device connector module is coupled at a particular orientation to the device connector module receptacle.

At step 820, the device connector module is placed into a slot of the plurality of slots. At step 830, the device connector module is attached to the device connector module receptacle using the keying tab aperture and the keying tab.

At step 840, the device connector module receptacle is coupled to a chassis of a computer system. In one embodiment, the device connector module receptacle is coupled to a drive bay of the chassis of the computer system.

Various embodiments of the present invention provide a device connector module and a device connector module receptacle. The device connector module can include any number or type of device connection mechanisms. By designing and manufacturing a number of different device connector modules, a computer system designer may select which particular device connector modules to include in a particular computer system. Accordingly, device connector modules may be used across several product lines. In order to provide different connectors to different computer systems, the computer system designer only needs to design a different device connector module receptacle, improving the time-to-market for the product. Furthermore, since device connector modules can be used across product lines, the profitability of a computer system is not adversely affected by number of device connector modules ordered or manufactured. Thus, the described embodiments provide improved device connector designs and implementations.

Embodiments of the present invention, a device connector module receptacle, are thus described. While the present Invention has been described in particular embodiments, it should be appreciated that the present invention should not be construed as limited by such embodiments, but rather construed according to the following claims.

## Claims

1. A device connector module receptacle 300 comprising:
a plurality of slots 310 for receiving a plurality of device connector modules 100, wherein a device connector module 100 of said plurality of device connector modules 100 comprises:
a device connection mechanism 110 including a first port 112 for coupling to an external device and a second port 114 for coupling to a computer system 500; and
a housing 120 encasing said device connection mechanism 110 such that said first port 112 and said second port 114 are accessible and wherein said housing 120 is for coupling said device connector module 100 to said device connector module receptacle 300;
wherein said device connector module receptacle 300 is configured for coupling to a chassis 505 of said computer system 500.

2. The device connector module receptacle 300 of Claim 1 further comprising a keying tab aperture 330 at a slot 310 of said plurality of slots 310, said keying tab aperture 330 for receiving a keying tab 130 of said housing 120 for fixedly coupling a device connector module 100 into a slot 310 to said device connector module receptacle 300.

3. The device connector module receptacle of 300 Claim 2 wherein said keying tab aperture 330 is configured such that said device connector module 100 is coupled to a particular slot 310 of said device connector module receptacle 300 and at a particular orientation.

4. The device connector module receptacle 300 of Claim 1 wherein said device connector module 100 is configured for coupling to a drive bay of said chassis 505.

5. The device connector module receptacle 300 of Claim 1 wherein said plurality of device connector modules 100 includes a Universal Serial Bus (USB) connector module.

6. The device connector module receptacle 300 of Claim 1 wherein said plurality of device connector modules 100 includes an IEEE 1394 connector module.

7. The device connector module receptacle 300 of Claim 1 wherein said plurality of device connector modules 100 includes a video connector module.

8. The device connector module receptacle 300 of Claim 1 wherein said plurality of device connector modules 100 includes an audio connector module.

9. A method for using a device connector module receptacle 300, said method comprising:
coupling a device connector module 100 to said device connector module receptacle 300, said device connector module receptacle 300 comprising a plurality of slots 310 for receiving said device connector module 100; and
coupling said device connector module receptacle 300 to a chassis 505 of a computer system 500.

10. The method as recited in Claim 9 wherein said device connector module receptacle 300 comprises a keying tab aperture 330 associated with a slot 310 of said plurality of slots 310, said keying tab aperture 330 for receiving a keying tab 130 of said device connector module 100 for fixedly coupling said device connector module 100 into a slot 310 of said plurality of slots 310.
